Europäisches Patentamt

European Patent Office

Office européen des brevets

(19)

(11) Publication number: **0 212 883**
**B1**

(12)

# EUROPEAN PATENT SPECIFICATION

(45) Date of publication of patent specification :
28.03.90

(21) Application number : 86305881.4

(22) Date of filing : 30.07.86

(51) Int. Cl.⁵ : **F 16 L 37/08, F 16 L 33/23**

(54) Improvements in or relating to tube couplings.

(30) Priority : 02.08.85 GB 8519462

(43) Date of publication cf application :
04.03.87 Bulletin 87/10

(45) Publication of the grant of the patent :
28.03.90 Bulletin 90/13

(84) Designated contracting states :
DE FR

(56) References cited :
GB—A— 1 316 324
GB—A— 2 051 280
GB—A— 2 080 461
GB—A— 2 088 001
GB—A— 2 132 296
GB—A— 2 144 192

(73) Proprietor : **Guest, John Derek**
**"Iona" Cannon Hill Way Bray**
**Maidenhead Berkshire (GB)**

(72) Inventor : **Guest, John Derek**
**"Iona" Cannon Hill Way Bray**
**Maidenhead Berkshire (GB)**

(74) Representative : **Bayliss, Geoffrey Cyril et al**
**BOULT, WADE & TENNANT 27 Furnival Street**
**London EC4A 1PQ (GB)**

EP 0 212 883 B1

Jouve, 18, rue St-Denis, 75001 Paris, France

## Description

This invention relates to a tube coupling to receive and automatically lock an end of a tube inserted in the couplings.

GB-A-2051280 discloses a tupe coupling for holding a resilient tube comprising a body member containing an integral or separate sleeve part which fits inside the tube, the tube being forced against the sleeve by arms of a collet. Pull on the tube to withdraw it from the collet by engagement of surfaces on the arms with an internal surface in the body member tightens the arms onto the tube. Sealing is obtained by the sleeve which may be externally tapered engaging in the tube to get effective sealing at low pressures in the fluid passing through the tube.

In practice such sleeves have been found to be partially effected in supporting the tube against the load imposed on it by the collet arms.

This invention provides a tube coupling comprising a body having a throughway open at one end to receive a tube, a collet insertable in said one end of the throughway and having a plurality of resilient arms extending into the throughway to encircle and grip the tube extending through the collet into the throughway, a frusto-conical cam surface in the throughway tapered towards said one end of the throughway to engage the collet arms and, with movement of the collet towards said open end of the throughway, to force the collet arms inwardly into gripping engagement with the tube and sleeve means to engage in the tube in the region engaged by said resilient arms ; wherein bracing means are provided for bracing the sleeve means within said region to support the sleeve and thereby the tube where the resilient arms bear on the tube.

The sleeve means may be in the form of a thin walled sleeve having an integral transverse wall or walls providing said bracing means. The transverse wall or walls may be formed integrally with the sleeve means and may be of cruciform cross section. The sleeve may be a separate element having an encircling flange at the end remote from the bracing means against which the end of the tube inserted over the sleeve is located, the flange bearing on a shoulder provided on a throughway or the sleeve may be formed integrally with the body. In either case the body may have an angular shoulder adjacent to the collet facing towards the open end of the body to receive an O-ring seal which engages the outer surface of the tube to seal therewith.

In the case where the sleeve is a separate component having an encircling end flange, the flange may be formed with an annular projection which engages against the annular step in the throughway to seal therewith.

The following is a description of two specific embodiments of the invention with reference being made to the accompanying drawings in which :

Figure 1 is a cross sectional view through a tube coupling incorporating a tube insert sleeve ;

Figure 2 is a sectional view through the sleeve ;

Figure 3 is a view of the sleeve from one end ;

Figure 4 is a view of the sleeve from the opposite end ;

Figure 5 is a detailed view of part of one end of the sleeve showing a raised integral sealing ring at said end ;

Figure 6 is a similar view to Figure 5 showing an alternative form of the sealing ring ;

Figure 7 is a cross sectional view through an alternative form of coupling ;

Figure 8 is a view looking into the coupling of Figure 7.

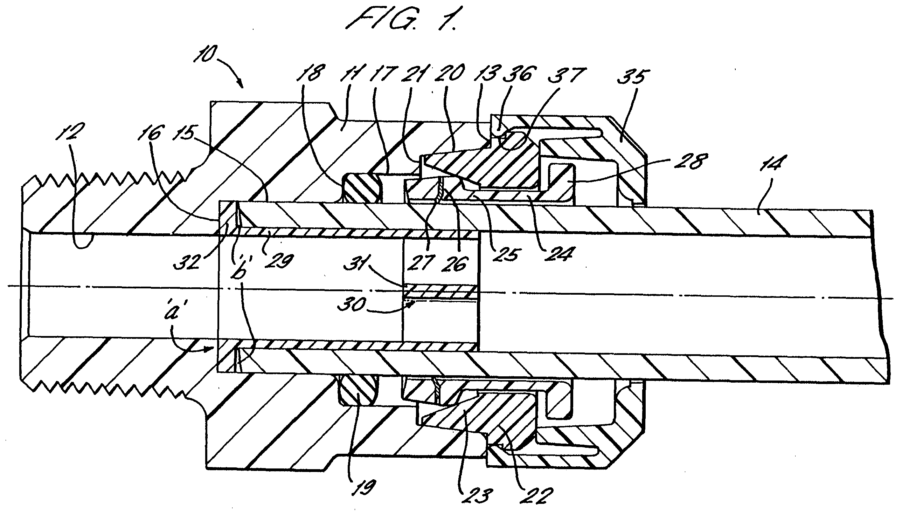

Referring firstly to Figure 1 of the drawings there is shown a tube coupling indicated generally by the reference numeral 10 and comprising a body 11 having a throughway 12.

The body 11 is open at one end 13 to receive a tube 14 to be secured in the coupling body. The throughway 12 has a counter-bore 15 in which the tube 14 is a close fit and an axially facing shoulder 16 bridges the counter-bore with the main part of the throughway 12 and faces towards the open end 13 of the body. The counter-bore 15 is itself formed with a further counter-bore 17 connected to the counter-bore 15 by a further axially facing shoulder 18 and an O-ring seal 19 is lodged against the shoulder 18 to seal with the outer surface of the tube 14. The counter-bore 17 is formed with yet a further counter-bore 20 connected to the counter-bore 17 by a shoulder 21 and annular end plug 22 is secured in the counter-bore 20. In the case where the body 11 and plug 22 are formed from plastics, the components may be ultrasonically welded together.

The annular plug 22 has a frusto-conical cam surface 23 encircling the throughway and tapering towards the open end of the body. A collet 24 is located in the annular plug and has resilient collet arms 25 extending into the throughway and engaging the cam surface 23. Each arm 25 is formed with a metal insert 26 having a tooth 27 projecting at the inner side of the arm to bear against and grip the tube 14. The collet 24 projects from the annular plug 22 and is formed with an out-turned head 28 to enable the collet to be gripped to move axially within the plug. It will be appreciated that as the collet is drawn outwardly of the body/plug the frusto-conical cam surface 23 will force the arms 25 of the plug inwardly to grip and lock the tube 14 in the throughway. In so doing, considerable radial load is imposed on the tube 14. In order to withstand that load, the tube has a thin walled insert sleeve 29 located in the end part of the sleeve. In the region of the tube 14 where the resilient arms bear on the tube, the insert sleeve is formed with an integral cruciform 30 of diametrically extending ribs 31 to support the wall of the sleeve and thereby the tube against the load imposed by the resilient arms. The cruciform is made to minimum wall thickness in order to minimise resistance to flow through the sleeve and the length of the cruciform is confined to the area of the sleeve within the zone where the resilient arms bear on the tube encircling the sleeve for the same purpose.

The other end of the sleeve 29 is formed with an out-turned flange 32 the outer diameter of which is a close fit in the counter-bore 15 and which bears against the shoulder 16. As can be seen in the diagram, the tube 14 is fitted over the sleeve 29 and the end of the tube abuts against the flange 32.

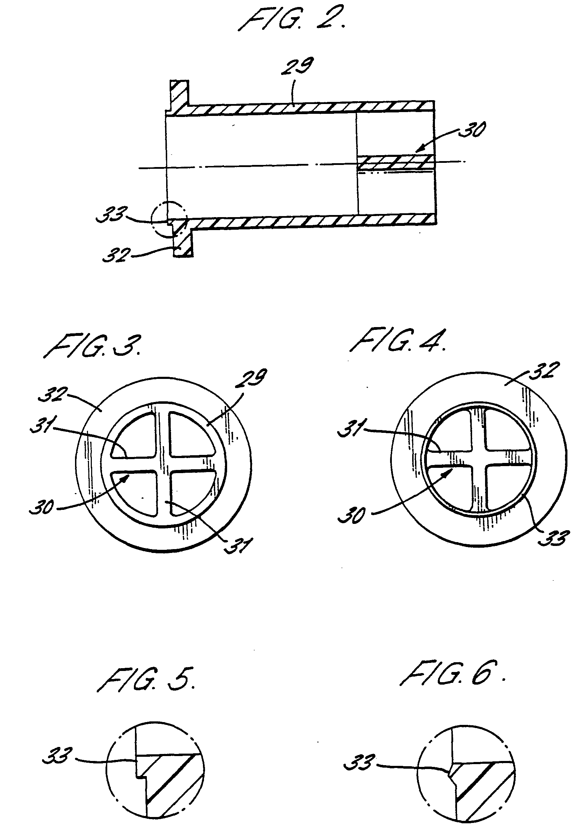

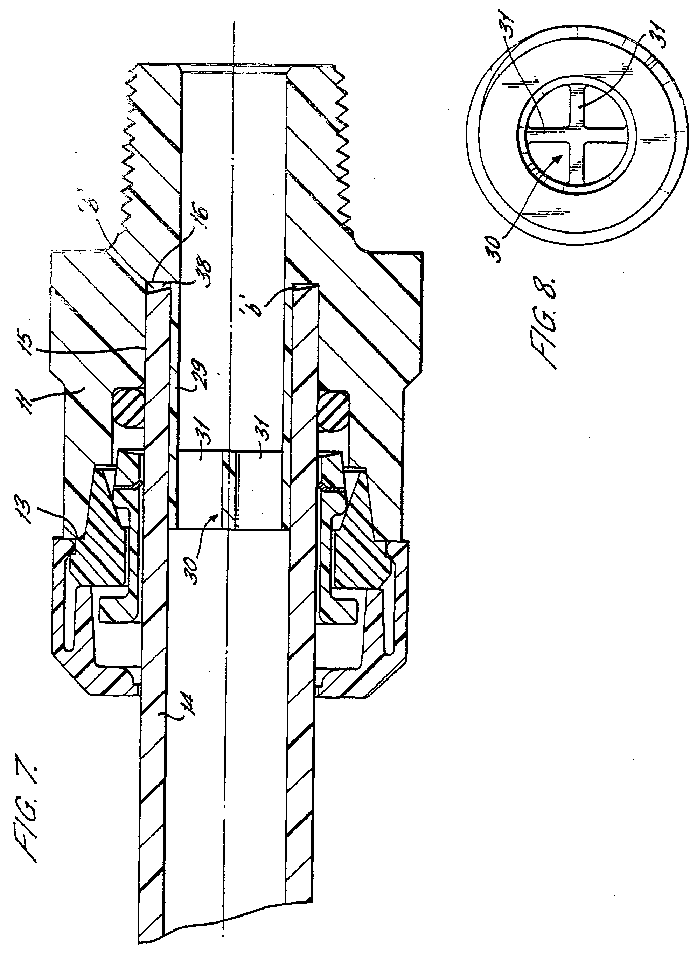

The side of the flange 32 bearing against the shoulder 16 is formed with a raised step or rib 33 as best seen in Figures 2 and 5 to bear against the shoulder 16 and form a seal therewith to prevent escape of fluid between the flange and shoulder. Thus if the tube 14 has not been cut clearly at its end so that the tube does not bear evenly against the flange 32 (as shown in the diagram), there will be consequential loss of fluid between the tube and sleeve 29. Figure 6 shows an alternative shape of raised rib of triangular cross-section.

The coupling is completed by removable end cap 35 which has a shoulder 36 to snap into a groove formed between the angular plus 22 and body member 11. The cap covers over the projecting end of the collet 28 to protect the collet against accidental impact which could release a tube from the coupling.

Figure 7 shows a modified construction which is generally similar to that described above and like parts have been allotted the same reference numerals. The main difference is that the insert sleeve 29 is formed integrally with the coupling body 11 to project along the body towards the open end 13 of the box. The sleeve 29 forms an angular recess 38 with the counter-bore 15 in the body to receive an end part of the tube 40 and the shoulder 16 on the body at the bottom of the recess receives the end of the tube. If the tube has not been cut square a residual gap may be left between the end of the tube and shoulder 16 as indicated in the diagram. The arrangement is otherwise identical to that described with reference to Figure 1 above.

## Claims

1. A tube coupling comprising a body (11) having a throughway (12) open at one end to receive a tube (14), a collet (24) insertable in said one end of the throughway and having a plurality of resilient arms (25) extending into the throughway to encircle and grip the tube extending through the collet into the throughway, a frusto-conical cam surface (23) in the throughway tapered towards said one end of the throughway to engage the collet arms and, with movement of the collet towards said open end of the throughway, to force the collet arms inwardly into gripping engagement with the tube and sleeve means (29) to engage in the tube in the region engaged by said resilient arms ; characterised in that bracing means (30) are provided for bracing the sleeve means (29) within said region to support the sleeve and thereby the tube where the resilient arms bear on the tube.

2. A coupling as claimed in Claim 1, characterised in that the sleeve means comprise a thin wall rigid sleeve (29) extending from the end of the tube (14) in the throughway (12) to the region of the tube engaged by the resilient arms (25) of the collet (24), said bracing means (30) being provided in the sleeve (29) in said region.

3. A coupling as claimed in Claim 2, characterised in that the bracing means comprise a transverse wall or walls (31) extending across the sleeve means (29).

4. A coupling as claimed in Claim 3, characterised in that the sleeve means (29) has an integral cruciform element (31) disposed therein in said region where the collet arms engaged to the tube encircle the sleeve.

5. A coupling as claimed in any of the preceding claims, characterised in that said sleeve means (29) has an outwardly extending flange (32) at the end remote from the bracing means (30) to receive on one side an end of the tube (14) to be secured in the coupling and to engage on the other side a shoulder (16) in the throughway (12) of the body.

6. A coupling as claimed in Claim 5, characterised in that said other side of the flange (32) is formed with an annular projection (33) to engage and seal against said shoulder (16) in the throughway.

7. A coupling as claimed in Claim 5 or Claim 6, characterised in that the throughway (12) has a portion (15) extending from said shoulder (16) towards the open end of the throughway having an internal diameter equivalent to the external diameter of the tube (14) and the outer diameter of the flange (32) on the sleeve is of similar diameter to that of said portion of the throughway whereby the tube and flange are a close fit in said portion of the throughway.

8. A coupling as claimed in any of Claims 2 to 7, characterised in that an annular seal (19) is mounted in the throughway (12) adjacent the collet (24) to engage the outer surface of the tube (14) and form a seal therewith.

9. A tube coupling as claimed in Claim 8, characterised in that the throughway (12) is formed with an annular step (18) facing towards the said open end of the throughway against which an O-ring seal (19) is disposed.

10. A coupling as claimed in any of Claims 2 to 4, characterised in that the sleeve (29) is formed integrally with the body (11).

11. A coupling as claimed in Claim 10, characterised in that an annular recess (15) is formed in the body (11) around the sleeve (29) to receive the end of the tube (14).

12. A coupling as claimed in Claim 10, or Claim 11, characterised in that the throughway (12) is formed with an annular step (18) adjacent to the collet (24) and an O-ring seal (19) is disposed against the step to seal with the outer surface of the tube (14) encircling the sleeve.

## Patentansprüche

1. Rohr- oder Schlauchkupplung mit einem Körper (11), der einen an einem Ende offenen Durchgang (12) zur Aufnahme eines Rohrs oder Schlauchs (14) aufweist, einem Klemmring (24), der in das eine Ende des Durchgangs einführbar ist und eine Vielzahl von biegsamen Armen (25) aufweist, die in den Durchgang hineinreichen, um das Rohr, das sich durch den Klemmring hindurch in den Durchgang hineinerstreckt zu umfassen und zu halten, einer kegelstumpfförmigen Steuefläche (23) in dem Durchgang, die sich zu dem einen Ende des Durchgangs hin verjüngt, um an den Armen des Klemmrings anzugreifen und, bei Bewegung des Klemmrings zu dem offenen Ende des Durchgangs hin, die Arme des Klemmrings nach innen in einen Klemmsitz mit dem Rohr zu zwingen, und einem Hülsenelement (29), um in das Rohr in dem Bereich, an den die biegsamen Arme angreifen, einzugreifen ; dadurch gekennzeichnet, daß Versteifungselemente (30) vorgesehen sind zum Aussteifen des Hülsenmittels (29) innerhalb des genannten Bereichs, um die Hülse und dadurch das Rohr, dort wo die biegsamen Arme an dem Rohr angreifen, abzustützen.

2. Kupplung nach Anspruch 1, dadurch gekennzeichnet, daß die Hülsenelemente eine dünnwandige steife Hülse (29) umfassen, die sich von dem Ende des Rohrs (14) in dem Durchgang (12) bis zu dem Bereich des Rohrs, an den die biegsamen Arme (25) des Klemmrings (24) angreifen, erstreckt, wobei die Versteifungselemente (30) in der Hülse (29) in diesem Bereich vorgesehen sind.

3. Kupplung nach Anspruch 2, dadurch gekennzeichnet, daß die Versteifungselemente eine Querwand oder Querwände (31) umfassen, die sich quer durch das Hülsenelement (29) erstrecken.

4. Kupplung nach Anspruch 3, dadurch gekennzeichnet, daß das Hülsenelement (29) ein einstückiges kreuzförmiges Element (31) aufweist, das in der Hülse in dem Bereich angeordnet ist, wo die an das Rohr angreifenden Arme des Klemmringes die Hülse umfassen.

5. Kupplung nach einem der vorstehenden Ansprüche, dadurch gekennzeichnet, daß das Hülsenelement (29) einen sich nach außen erstreckenden Flansch (32) an dem von den Versteifungselementen (30) entfernt liegenden Ende aufweist, um an einer Seite ein Ende des Rohres (14) aufzunehmen, das in der Kupplung befestigt werden soll, und um auf der anderen Seite an eine Schulter (16) in dem Durchgang (12) des Körpers anzugreifen.

6. Kupplung nach Anspruch 5, dadurch gekennzeichnet, daß die andere Seite des Flansches (32) mit einem ringförmigen Vorsprung (33) ausgebildet ist, um gegen die Schulter (16) in dem Durchgang anzugreifen und abzuschließen.

7. Kupplung nach Anspruch 5 oder 6, dadurch gekennzeichnet, daß der Durchgang (12) einen Bereich (15) hat, der sich von der Schulter (16) zu dem offenen Ende des Durchgangs hin erstreckt, mit einem inneren Durchmesser entsprechend dem äußeren Durchmesser des Rohres (14), und daß der äußere Durchmesser des Flansches (32) an dem Rohr einen gleichen Durchmesser wie dieser Bereich des Durchgangs hat, wodurch das Rohr und der Flansch eine Feinpassung in diesem Bereich des Durchgangs bilden.

8. Kupplung nach einem der Ansprüche 2 bis 7, dadurch gekennzeichnet, daß eine Ringdichtung (19) in dem Durchgang angrenzend an den Klemmring (24) angebracht ist, um an die äußere Oberfläche des Rohres (14) anzugreifen und mit dieser eine Dichtung zu bilden.

9. Rohrkupplung nach Anspruch 8, dadurch gekennzeichnet, daß der Durchgang (12) mit einem zu dem offenen Ende des Durchgangs hingerichteten ringförmigen Absatz (18) ausgebildet ist, gegen den eine O-Ringdichtung (19) angelegt wird.

10. Kupplung nach einem der Ansprüche 2 bis 4, dadurch gekennzeichnet, daß die Hülse (29) einstückig mit dem Körper (11) ausgebildet ist.

11. Kupplung nach Anspruch 10, dadurch gekennzeichnet, daß eine ringförmige Aussparung (15) in dem Körper (11) um die Hülse (29) herum ausgebildet ist, um das Ende des rohrs (14) aufzunehmen.

12. Kupplung nach Anspruch 10 oder 11, dadurch gekennzeichnet, daß der Durchgang (12) mit einem ringförmigen Absatz (18) angrenzend an den Klemmring (24) ausgebildet ist, und daß eine O-Ringdichtung (19) an den Absatz angelegt wird, um mit der die Hülse umfassenden äußeren Oberfläche des Rohrs (14) abzudichten.

## Revendications

1. Raccord de tube comportant un corps (11) qui est traversé par un passage débouchant (12) ouvert à une extrémité pour recevoir un tube (14), un collet (24) de serrage pouvant être inséré dans une desdites extrémités du passage et présentant une pluralité de bras flexibles (25) s'étendant dans le passage pour encercler et serrer le tube traversant le collet et dans le passage débouchant, une surface de came tronconique (23) dans le passage débouchant conique en direction de ladite extrémité du passage débouchant de manière à s'engager sur les bras du collet de serrage et, grâce au déplacement du collet en direction de ladite extrémité ouverte du passage débouchant, à faire entrer les bras du collet à force vers l'intérieur en prise de serrage avec le tube et le moyen formant manchon (29) afin de s'engager dans le tube dans la zone en prise par lesdits bras flexibles, caractérisé en ce que des moyens d'attache (30) sont prévus pour attacher le moyen en forme de manchon (29) à l'intérieur de ladite zone pour supporter le manchon, et donc le tube, à l'endroit où les bras flexibles appuient sur le tube.

2. Raccord selon la revendication 1, caractérisé en ce que le moyen formant manchon comporte un manchon rigide à paroi mince (29) s'étendant depuis l'extrémité du tube (14) dans le passage débouchant (12) jusqu'à la zone du tube en prise avec les bras flexibles (25) du collet (24), lesdits moyens d'attache (30) étant prévus dans le manchon (29) dans ladite zone.

3. Raccord selon la revendication 2, caractérisé en ce que les moyens d'attache comportent une paroi ou des parois transversales (31) s'étendant en travers des moyens formant manchon (29).

4. Raccord selon la revendication 3, caractérisé en ce que le moyen formant manchon (29) comporte à l'intérieur un élément cruciforme d'un seul tenant (31) dans ladite zone où les bras du collet en prise avec le tube encerclent le manchon.

5. Raccord selon l'une des revendications précédentes, caractérisé en ce que ledit moyen formant manchon (29) présente une bride s'étendant vers l'extérieur (32) à l'extrémité éloignée des moyens d'attache (30) pour recevoir sur un côté une extrémité du tube (14) devant être fixée solidement dans le couplage et en prise sur l'autre côté avec un épaulement (16) dans le passage débouchant (12) du corps.

6. Raccord selon la revendication 5, caractérisé en ce que l'autre desdits côtés de la bride (32) présente une saillie annulaire (33) pour s'engager contre ledit épaulement (16) dans le passage débouchant et y assurer l'étanchéité.

7. Raccord selon l'une des revendications 5 ou 6, caractérisé en ce que le passage débouchant (12) présente une partie (15) s'étendant depuis ledit épaulement (16) en direction de l'extrémité ouverte du passage débouchant dont le diamètre intérieur est équivalent au diamètre extérieur du tube (14) et dont le diamètre extérieur de la bride (32) sur le manchon est d'un diamètre similaire à celui de ladite partie du passage débouchant, ce qui permet au tube et à la bride d'être ajustés serrés dans ladite partie du passage débouchant.

8. Raccord selon l'une des revendications 2 à 7, caractérisé en ce qu'un joint annulaire (19) est monté dans le passage débouchant (12) à côté du collet (24) pour s'engager sur la surface extérieure du tube (14) et former un joint à cet endroit.

9. Raccord selon la revendication 8, caractérisé en ce que le passage débouchant (12) présente un palier annulaire (18) faisant face en direction de ladite extrémité ouverte du passage débouchant contre laquelle est disposé un joint torique d'étanchéité (19).

10. Raccord selon l'une des revendications 2 à 4, caractérisé en ce que le manchon (29) fait partie intégrante du corps (11).

11. Raccord selon la revendication 10, caractérisé en ce qu'un creux annulaire (15) est ménagé dans le corps (11) autour du manchon (29) pour recevoir l'extrémité du tube (14).

12. Raccord selon la revendication 10 ou la revendication 11, caractérisé en ce que le passage débouchant (12) présente un palier annulaire (18) à côté du collet (24) et en ce qu'un joint torique d'étanchéité (19) est placé contre le palier pour assurer l'étanchéité avec la surface extérieure du tube (14) encerclant le manchon.

FIG. 1.

FIG. 2.

FIG. 3.

FIG. 4.

FIG. 5.

FIG. 6.

FIG. 7.

FIG. 8.

EP 0 212 883 B1